# EUROPÄISCHE PATENTANMELDUNG

(11) **EP 3 009 214 A1**
(43) Veröffentlichungstag der Anmeldung: **20.04.2016**
(21) Anmeldenummer: 14189407.1
(22) Anmeldetag: 17.10.2014
(51) Int. Cl.: B23B 31/02, B23B 31/117

(54) **Hochgeschwindigkeitswerkzeughalter**

(71) Anmelder: Straumann Holding AG, 4002 Basel (CH)
(72) Erfinder: Kurth, Dieter, 4002 Basel (CH)
(74) Vertreter: Modiano, Micaela Nadia

(57) **Zusammenfassung**

Die vorliegende Erfindung betrifft ein Hochgeschwindigkeitswerkzeughalter, umfassend:
- einen Werkzeugschaft zur Aufnahme eines Werkzeugs an seinem ersten Ende; und
- ein Maschinenspannteil (4), das mit dem Werkzeugschaft integral verbunden ist und eine Schnittstelle zum Einspannen in die Maschine darstellt; wobei
- der Werkzeugschaft im Wesentlichen kreiskegelstumpfförmig ausgebildet ist, wobei ein erster Durchmesser (D1) am ersten Ende mit der Werkzeugeinführungsöffnung kleiner ist als ein fünfter Durchmesser (D5) am zweiten Ende am Maschinenspannteil
- und ein Teilbereich des im Wesentlichen kreiskegelstumpfförmigen Werkzeugschafts zwischen Werkzeugeinführungsöffnung und Maschinenspannteil eine nach außen gewölbte, bevorzugt kugelförmige, Form aufweist.

## Beschreibung

Die vorliegende Erfindung betrifft einen Hochgeschwindigkeitswerkzeughalter, der zur Aufnahme eines Werkzeugs und zum Einspannen in eine Maschine dient und der durch eine besondere Formgebung besonders schwingungsgedämpft ausgebildet ist.

Herkömmliche Hochgeschwindigkeitswerkzeughalter zur Aufnahme des Werkzeugs und zum Einspannen in die Maschine, wie beispielsweise in eine Dreh-, eine Fräs- oder eine Bohrmaschine sind von einem ersten Ende, an dem das Werkzeug eingespannt ist, bis zu einem zweiten Ende, das in die Maschine eingespannt ist, im Durchmesser zunehmend konisch ausgebildet. Dadurch soll am vorderen ersten Ende möglichst wenig Masse angeordnet sein, wo später eine Materialbearbeitung durch das Werkzeug stattfindet. Zugleich wird durch die konische und im Durchmesser zunehmende Form zum hinteren Bereich hin einem höheren Biegemoment als im vorderen Bereich Rechnung getragen und die notwendige Steifigkeit entsprechend erhöht. Es sind auch Hochgeschwindigkeitswerkzeughalter bekannt, die aus verschiedenen Teilen zusammengesetzt oder zusammengeschweißt sind, um eine bestimmte Form oder Funktionalität zu erreichen.

Bei hohen Drehzahlen und bei der spanabhebenden Bearbeitung treten jedoch im Hochgeschwindigkeitswerkzeughalter Schwingungen quer zu dessen Längsachse auf, ähnlich einer Stimmgabel, die ein Werkzeug, wie beispielsweise einen Fräser, sich sehr schnell abnutzen lassen. Der Hochgeschwindigkeitswerkzeughalter ist dabei bevorzugt ein Schrumpffutter, ein Werkzeughalter mit Schraubverbinder, ein Hybridverbinder oder eine Spannhülse. Um die Schwingungen zu begrenzen, werden die Hochgeschwindigkeitswerkzeughalter bevorzugt möglichst kurz ausgebildet, wobei aber auch nur entsprechend begrenzte Kontouren und vor allen Innenkontouren gefräst werden können, damit ein Futter für den Hochgeschwindigkeitswerkzeughalter nicht am Werkstück oder Werkstückhalter anschlägt.

Um die Nachteile aus dem Stand der Technik zu beseitigen, besteht eine Aufgabe der Erfindung darin, einen Hochgeschwindigkeitswerkzeughalter mit einer möglichst guten Schwingungsdämpfung von Querschwingungen entlang seiner Längsachse und insbesondere im vorderen Teil des mit einem Hochgeschwindigkeitswerkzeughalters verbundenen Werkzeugs bereitzustellen. Zudem soll der Hochgeschwindigkeitswerkzeughalter auch für größere Längen verwendet werden können, als es mit den Werkzeughaltern aus dem Stand der Technik möglich ist.

Die vorstehenden Aufgaben sowie weitere der Beschreibung zu entnehmende Aufgaben werden von einer Vorrichtung gemäß den Merkmalen des unabhängigen Anspruchs 1 gelöst. Weitere vorteilhafte Ausführungsformen der Erfindung sind in den abhängigen Ansprüchen und in der Beschreibung angegeben.

Erfindungsgemäß wird ein Hochgeschwindigkeitswerkzeughalter zur Aufnahme eines Werkzeugs an seinem ersten Ende und zum Einspannen in eine Maschine an seinem zweiten Ende bereitgestellt, wobei die Enden an den entgegengesetzten Seiten der Längsachse des Hochgeschwindigkeitswerkzeughalters angeordnet sind, wobei der Hochgeschwindigkeitswerkzeughalter folgendes umfasst:
einen Werkzeugschaft, der entlang der Längsachse zentrisch ausgebildet ist und das erste Ende des Hochgeschwindigkeitswerkzeughalters bestimmt, wobei am ersten Ende eine Werkzeugeinführungsöffnung mit einer ersten Bohrung zur Aufnahme des Werkzeugs ausgebildet ist, und
ein ebenfalls entlang der Längsachse zentrisch ausgebildetes Maschinenspannteil, das mit dem Werkzeugschaft an einem dem ersten Ende gegenüberliegenden Ende integral verbunden ist und eine Schnittstelle zum Einspannen in die Maschine darstellt, wobei
der Werkzeugschaft im Wesentlichen kreiskegelstumpfförmig ausgebildet ist, wobei ein erster Durchmesser am ersten Ende mit der Werkzeugeinführungsöffnung kleiner ist als ein fünfter Durchmesser am zweiten Ende am Maschinenspannteil und
ein Teilbereich des im Wesentlichen kreiskegelstumpfförmigen Werkzeugschafts zwischen Werkzeugeinführungsöffnung und Maschinenspannteil eine nach außen gewölbte, bevorzugt kugelförmige, Form aufweist.

Bevorzugt ist der Werkzeugschaft entlang der Längsachse in einen ersten, zweiten und dritten Abschnitt untergliedert ist, die der Reihe nach integral ineinander übergehen, wobei
der erste Abschnitt am ersten Ende mit der Werkzeugeinführungsöffnung angeordnet ist und in Richtung zum zweiten Abschnitt von einem ersten Durchmesser zu einem zweiten Durchmesser im Wesentlichen kreiskegelstumpfförmig zunehmend ausgebildet ist, wobei eine im Wesentlichen kegelstumpfförmige Ausbildung eine ist, worin die Kegelstumpfform optional lokale Verdickungen ausweisen kann;
der zweite Abschnitt, der dem Teilbereich mit der nach außen gewölbten Form entspricht, an einer Stelle, die dem ersten Abschnitt angrenzt, den zweiten Durchmesser hat und an einer Stelle, die dem dritten Abschnitt angrenzt, einen vierten Durchmesser hat, der größer als oder gleich wie der zweite Durchmesser ist, wobei der zweite Abschnitt über dessen Länge die in Bezug auf die Längsachse nach außen gewölbte und bevorzugt kugelige Form hat; und
der dritte Abschnitt, an einer Stelle, die dem zweiten Abschnitt angrenzt, den vierten Durchmesser hat und weiter bis zum fünften Durchmesser konisch zunimmt.

Zur Klarheit sei angemerkt, dass, im Rahmen dieser Erfindung, die Begriffe konisch oder kegelstumpfförmig gleichbedeutend sind mit kreiskegelstumpfförmig.

Erfindungsgemäß weist der Teilbereich mit der nach außen gewölbten Form eine bevorzugt kugelige oder ovale Form entlang der Längsachse auf. Dadurch wird bewirkt, dass sich Schwingungen, die durch ein Fräsen und/oder von außen stoßweise anregende Kräfte entstehen, stark gedämpft werden und sich nicht entlang und quer zur Längsachse ausbreiten können. Eine Anregung von Schwingungen durch beispielsweise zentrifugale Kräfte, die durch schwingungsmäßig leicht exzentrische Auslenkungen des ersten Endes des Werkzeugschafts zustande kommen, können sich durch die vorliegende Geometrie des Teilbereichs mit der nach außen gewölbten Form nicht oder nur sehr stark vermindert ausbreiten oder aufschaukeln.

Durch eine bevorzugte kugelige oder ovale Querschnittgeometrie des Teilbereichs mit der nach außen gewölbten Form mit einer entsprechenden zu- und abnehmenden Quersteifigkeit entlang der Längsachse werden Schwingungen quer zur Längsachse sehr gut gedämpft. Auch eine erhöhte Massenträgheit der Verdickung des zweiten Abschnitts trägt positiv zu der Schwingungsdämpfung bei. Besonders vorteilhaft kann aber auch eine Reduzierung der Massenträgheit des Teilbereichs mit der nach außen gewölbten Form sein, indem dieser durch die nach außen gewölbte Kontur mit der stark erhöhten Steifigkeit innen ausgehöhlt werden kann.

Bevorzugt sind im Innern des Teilbereichs mit der nach außen gewölbten Form und/oder im dritten Abschnitt Bohrungen oder sonstige Hohlräume vorgesehen, um darin Dämpfungselemente wie beispielsweise korpuskuläre Füllstoffe und/oder viskose Füllstoffe und/oder Schäume vorzusehen. Insbesondere auch eine Kombination der korpuskulären und der viskosen Füllstoffe sind vorteilhaft für die Schwingungsdämpfung des Hochgeschwindigkeitswerkzeughalters.

Die in den Ansprüchen und in der detaillierten Beschreibung genannten Abmaße und Formgeometrien haben sich als besonders vorteilhaft für eine Schwingungsdämpfung herausgestellt.

Vorteilhafterweise wird die Werkzeugeinführöffnung am ersten Ende ohne Vorweite ausgeführt, so dass sie nach Einführung des Werkzeugs besonders eng am Werkzeug anliegt und dadurch einer initialen Schwingungserregung entgegenwirkt.

Bevorzugt wird der erste Abschnitt an der Werkzeugeinführöffnung mit einer zusätzlichen Verdickung ausgeführt, um nahe dem Eintritt des Werkzeugs in den Hochgeschwindigkeitswerkzeughalter eine besonders gute Steifigkeit und einen entsprechenden Halt des Werkzeugs darin zu erzeugen.

Durch Hochgeschwindigkeitswerkzeughalter mit einer größeren Länge wird der Bearbeitungsspielraum des Werkstückes vergrößert. So können zum Beispiel erfindungsgemässe Hochgeschwindigkeitswerkzeughalter eine Gesamtlänge von bis zu 200mm, beispielsweise von 80 bis 180mm, bevorzugt von 100 bis 140mm, aufweisen.

Eine bevorzugte Ausführungsform gemäß der vorliegenden Erfindung ist in nachfolgenden Zeichnungen und in einer detaillierten Beschreibung dargestellt, soll aber die vorliegende Erfindung nicht darauf begrenzen.

Es zeigen
- Fig. 1A: in einer Seitenansicht ein Schrumpffutter als einen Hochgeschwindigkeitswerkzeughalter, das einen Werkzeugschaft mit einem ersten Abschnitt, in den ein Werkzeug einführbar ist, mit einem zweiten Abschnitt, der eine Verdickung aufweist, und mit einem dritten Abschnitt und das integral mit dem dritten Abschnitt verbunden ein Maschinenspannteil umfasst, wobei der erste Abschnitt an einer Werkzeugeinführöffnung eine weitere Verdickung aufweist;
- Fig. 1B: das Schrumpffutter der Fig. 1A in der Seitenansicht als Schnittbild entlang der Mittellängsachse, wobei der erste Abschnitt eine erste Bohrung, der zweite Abschnitt eine zweite Bohrung und der dritte Abschnitt eine dritte Bohrung aufweist;
- Fig. 2: das Schrumpffutter gemäß Fig. 1A und 1B in einer frontalen Draufsicht auf eine äußere Stirnseite mit der Werkzeugeinführöffnung;
- Fig. 3: das Schrumpffutter gemäß Fig. 1A, 1B und 2 als perspektivische Darstellung;
- Fig. 4: das Schrumpffutter als Schnittbild gemäß Fig. 1A und 1B, wobei die zweite und die dritte Bohrung durch Trennelemente abgedichtet sind und im Innern Füllmaterial enthalten;
- Fig. 5: ein anderes Schrumpffutter als Schnittbild ähnlich dem gemäß Fig. 1A und B, wobei der erste Abschnitt an der Werkzeugeinführöffnung in dieser Ausbildungsform keine weitere Verdickung aufweist.

### Detaillierte Beschreibung der Erfindung

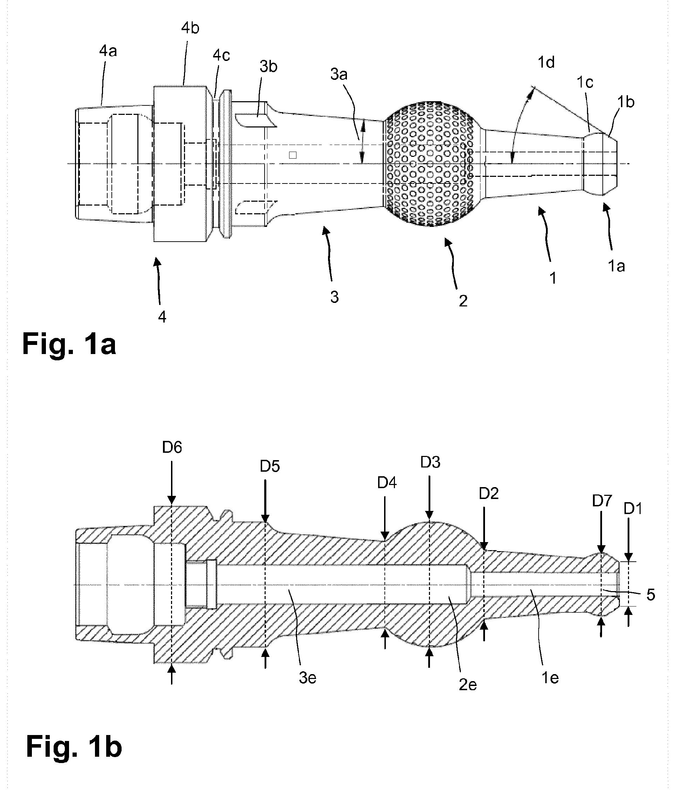

In Fig. 1A, 1B, Fig. 2 und Fig. 3 ist ein bevorzugter Hochgeschwindigkeitswerkzeughalter in verschiedenen Ansichten abgebildet, der als ein Schrumpffutter ausgebildet ist. Das Schrumpffutter besitzt an seinem ersten Ende zur Aufnahme eines Werkzeugs eine Werkzeugeinführöffnung 5 und an seinem entlang der Längsachse gegenüberliegenden zweiten Ende ein Maschinenspannteil 4 zum Einspannen in eine Maschine. Das Schrumpffutter umfasst dabei im Wesentlichen das Maschinenspannteil 4 und einen anschließenden Werkzeugschaft, die beide entlang der und um die Längsachse zentrisch ausgebildet sind und integral miteinander verbunden sind. Zur Klarheit sei angemerkt, dass die Längsachse die Mittellängsachse des Hochgeschwindigkeitswerkzeughalters ist.

Das Maschinenspannteil 4 stellt eine Schnittstelle zum Einspannen in die Maschine dar und umfasst bevorzugt am zweiten Ende einen Spannkonus 4a, einen Spannzylinder 4b und eine Nute 4c, die an eine Schnittstelle der Maschine, mit der das Maschinenspannteil 4 verbunden werden soll, angepasst sind. Hierfür gibt es verschiedene Standards, die den Spannkonus 4a, den Spannzylinder 4b und dessen Durchmesser D6 bestimmen.

Der Werkzeugschaft stellt eine integrale Fortführung des Maschinenspannteils 4 entlang der Längsachse dar und weist an seinem äußeren ersten Ende eine erste Bohrung 1 e auf, die nach außen die Werkzeugeinführöffnung 5 darstellt, um darin das Werkzeug einführen und festhalten zu können. Bevorzugt ist der Werkzeugschaft dabei ausgebildet, durch eine Erhitzung sich thermisch auszudehnen, um dann das Werkzeug einzuführen, wobei durch eine nachfolgende Abkühlung das Werkzeug klemmend durch die thermische Schrumpfung gehalten wird. Alternativ kann der Werkzeugschaft natürlich auch ausgebildet sein, das Werkzeug anstelle durch die thermischen Klemmung durch eine andere mechanische Klemmung zu halten, wie beispielsweise durch eine Schraubverbindung, Hybridfuttertechnik und/oder durch eine Spannhülse.

Erfindungsgemäß ist der Werkzeugschaft entlang der Längsachse in einen ersten 1, einen zweiten 2 und einen dritten Abschnitt 3 untergliedert, die der Reihe nach integral ineinander übergehen. Dabei ist der erste Abschnitt 1 am ersten Ende mit der Werkzeugeinführungsöffnung 5 angeordnet und in Richtung zum zweiten Abschnitt 2 von einem ersten Durchmesser D1 zu einem zunehmenden zweiten Durchmesser D2 im Wesentlichen kreiskegelstumpfförmig ausgebildet.

Dabei hat der zweite Abschnitt 2 an einer Schnittstelle zum ersten Abschnitt 1 den zweiten Durchmesser D2 und an einer Schnittstelle zu dem dritten Abschnitt 3 einen vierten Durchmesser D4, der größer als der zweite Durchmesser D2 ist. Zwischen der Schnittstelle mit dem zweiten Durchmesser D2 und der Schnittstelle mit dem vierten Durchmesser D4 weist der zweite Abschnitt 2 über dessen Länge und in Bezug auf die Längsachse eine nach außen gewölbte Form auf. Dabei ist die nach außen gewölbte Form eines mittleren Teils des zweiten Abschnitts 2 bevorzugt kugelförmig oder hat einen ovalen Querschnitt entlang der Längsachse. In der Mitte oder nahe der Mitte des zweiten Abschnitts 2 weist dieser einen dritten Durchmesser auf, der dementsprechend größer als der zweite D2 und der vierte Durchmesser D4 ist. Durch die nach außen gewölbte Form weist der zweite Abschnitt eine entsprechende Steifigkeit auf, die sehr vorteilhaft für eine Dämpfung von Schwingungen entlang der Längsachse ist. Durch die nach außen gewölbten Form und die dadurch erzeugte zusätzliche Steifigkeit werden die Schwingungen weitgehend vermieden oder gedämpft. Zusätzlich kann durch die nach außen gewölbte Form eine erhöhte Massenträgheit gebildet werden, um Schwingungen um die Längsachse besser aufzunehmen und zu dämpfen. Alternativ kann durch die nach außen gewölbte Form aber auch sowohl eine erhöhte Steifigkeit als auch eine geringere Masse erzeugt werden, im Vergleich zu einer Form ohne die nach außen gewölbte Form, also wenn der zweite Abschnitt 2 einfach konisch vom zweiten D2 zu, vierten Durchmesser D4 übergehen würde.

Der dritte Abschnitt 3 weist an einer Schnittstelle zum zweiten Abschnitt 2 den vierten Durchmesser D4 auf und hat an einer Schnittstelle zum Maschinenspannteil 4 einen fünften Durchmesser D5. Bevorzugt nimmt der Durchmesser des dritten Abschnitts von der Schnittstelle zum zweiten Abschnitt 2 mit dem vierten Durchmesser D4 bis zur Schnittstelle zum Maschinenspannteil 4 konisch zu. Die konische Zunahme erfolgt hierbei bevorzugt mit dem gleichen Konuswinkel, beispielsweise einem Winkel von etwa 5 Grad, wie im ersten Abschnitt. Am Ende des dritten Abschnitts 3, das an das Maschinenspannteil 4 angrenzt, sind bevorzugt noch Kerben 3b eingebracht, um das Hochgeschwindigkeitswerkzeughalter besser in die Maschine eindrehen und daraus wieder lösen zu können.

Bevorzugt ist der erste Abschnitt 1 kegelstumpfförmig ausgebildet. Bevorzugt ist der dritte Abschnitt 3 kegelstumpfförmig ausgebildet.

Im Innern weist das Schrumpffutter entlang der Längsachse bevorzugt eine Bohrung oder einen Hohlraum auf. Bevorzugt weist das Schrumpffutter im ersten Abschnitt 1 eine erste Bohrung 1 e, im zweiten Abschnitt 2 eine zweite Bohrung 2e und im dritten Abschnitt 3 eine dritte Bohrung 3e auf. Bevorzugt ist die Bohrung auch durch das Maschinenspannteil 4 geführt, dass ein durchgehender Kanal vorliegt. Bevorzugt sind der durchgehende Kanal oder die erste 1 e und/oder die zweite 2e und/oder die dritte Bohrung 3e durch mindestens ein Trennelement 6a, 6b, 6c getrennt. Zur Klarheit sei angemerkt, dass unter Bohrung auch eine Bohrung verstanden wird, die unterschiedliche Durchmesser haben kann und die auch als Ausdrehung mit einer konischen oder kugeligen oder beliebigen Form verstanden werden kann.

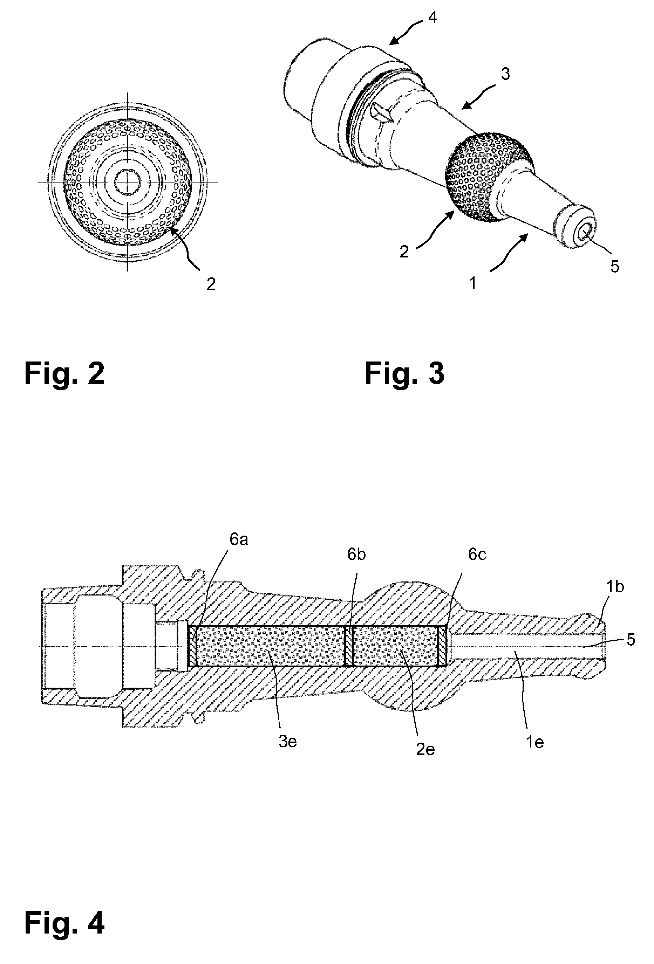

In Fig. 4 ist eine Ausführungsform des Schrumpffutters gemäß Fig.- 1-3 abgebildet, wobei das Schrumpffutter den zweiten 2e und den dritten Hohlraum 3e aufweist, die durch das erste Trennelement 6a, das zweite Trennelement 6b und das dritte Trennelement 6c abgeschlossen sind. Dabei ist es ebenso denkbar, dass das erste 6a, das zweite 6b und das dritte Trennelement 6c auch in benachbarten Abschnitten des Schrumpffutters liegen können. Beispielsweise erstrecket sich der dritte Hohlraum 3e in der in Fig. 4 dargestellten Ausführungsform in das Maschinenspannteil 4 hinein und dementsprechend befindet sich das erste Trennelement 6a darin. Bevorzugt kann auch eines der Trennelemente 6a-6c integral mit dem Schrumpffutter verbunden sein, das beispielsweise nicht ausgebohrt ist, sondern stehen blieb. In der Ausführungsform der Fig. 4 ist das erste Trennelement 6a beispielsweise in dem Maschinenspannteil 4 angeordnet und die dritte Bohrung 3e entsprechend verlängert. In dem dritten Hohlraum 3e oder der Bohrung ist bevorzugt der Füllstoff eingebracht. Bevorzugt ist die zweite Bohrung oder der Hohlraum 2e zum ersten Hohlraum 1 e durch das dritte Trennelement 6c getrennt und daher in sich abgeschlossen. In dem zweiten Hohlraum 2e ist bevorzugt ein weiterer Füllstoff oder ein Füllstoffgemisch eingebracht.

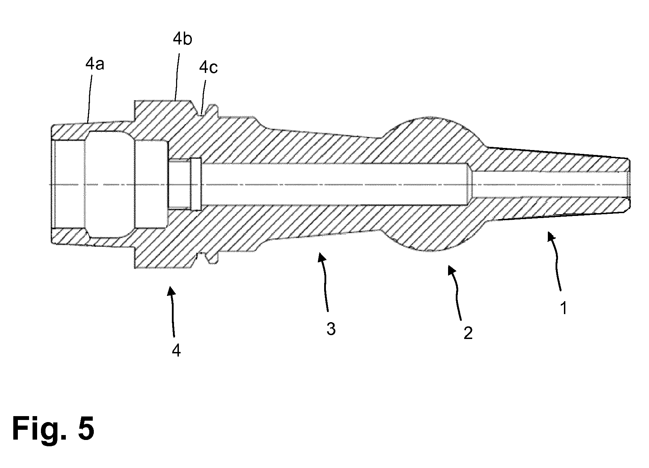

Fig. 5 zeigt eine bevorzugte Ausführungsform des Schrumpffutters ohne die weitere Verdickung 1a im ersten Abschnitt 1.

Die bevorzugte Ausführungsform des Schrumpffutters gemäß Fig. 1A bzw. 1 B weist an seinem ersten Ende gleich am Anfang, zum Maschinenspannteil 4 hin gesehen, eine zur Längsachse hin zentrische weitere Verdickung 1a auf, die innerhalb eines äußeren Drittels oder Viertels des ersten Abschnitts am ersten Ende angeordnet ist. Dabei umfasst die weitere Verdickung 1a einen ersten Konus 1 b, der vom äußeren Ende mit dem ersten Durchmesser D1 bis zu einem siebten Durchmesser D7 zunimmt, und einen zweiten Konus 1 c, der vom siebten Durchmesser D7 bis zu einem Durchmesser abnimmt, der zwischen dem ersten D1 und dem zweiten Durchmesser D2 liegt. Bevorzugt nimmt der erste Konus 1 b mit einem ersten Konuswinkel 1d zu, der zwischen 30°- 60° liegt. Der siebte Durchmesser D7 hat dabei einen Durchmesser, der größer als der erste D1 und der zweite Durchmesser D2 ist. Die weitere Verdickung 1a ist dabei so ausgebildet, dass sie das Werkzeug am ersten Ende der ersten Bohrung 1 e stärker klemmt als ohne die weitere Verdickung 1a.

Bevorzugt ist die erste Bohrung 1 e am äußeren ersten Ende, wo das Werkzeug eingeführt wird, etwas aufgeweitet, um das Werkzeug besser einführen zu können. Viel mehr bevorzugt ist jedoch, dass die erste Bohrung 1 e am äußeren ersten Ende, wo das Werkzeug eingeführt wird, keine Aufweitung besitzt und also im Einführungsbereich für das Werkzeug eine zur Längsachse parallele Bohrung aufweist, um das Werkzeug an dieser Stelle besser halten zu können, und um Schwingungen dadurch besser zu unterdrücken oder gar nicht erst aufkommen zu lassen. Dafür kann das Werkzeug dann entsprechend angefast sein, um es gut in die erste Bohrung 1 e einführen zu können.

Der Werkzeugschaft mit dem ersten 1, dem zweiten 2 und dem dritten Abschnitt 3 ist grundsätzlich durch eine Form und mit einem entlang der Längsachse variierenden Querschnitt so ausgebildet, um dabei eine möglichst gute Steifigkeit, wenig Gesamtmasse und eine möglichst gute Dämpfungseigenschaft für Schwingungen entlang der Längsachse zu erzeugen. Zur Klarheit ist allgemein bei der Dämpfung der Schwingungen zu verstehen, dass es sich dabei um Schwingungen handelt, die durch eine schnelle Rotation oder Umdrehungszahl des Schrumpffutters um die Längsachse entstehen können, und dass es sich bei den Schwingungen um Schwingungen zur Längsachse, wie bei einer Stimmgabel, handelt. Die Umdrehungszahl, die typischerweise angewendet wird, liegt bevorzugt im Bereich von 20.000 - 100.000 Umdrehungen pro Minute (Upm). Es werden teils aber auch Umdrehungszahlen von bis zu 180.000 Upm angewendet, wofür der Hochgeschwindigkeitswerkzeughalter ausgebildet sein muss. Die hohen Drehzahlen ermöglichen eine hohe Schnittgeschwindigkeit und dadurch einen hohen Vortrieb.

Bevorzugt weist die nach außen gewölbte Form eine Oberfläche mit einer Vielzahl von Mulden auf, die ähnlich der Oberfläche eines Golfballs ist. Dadurch wird weniger störender Schall erzeugt. Zudem wird dadurch Material eingespart, ohne dabei die Steifigkeit des zweiten Abschnitts 2 wesentlich zu beeinträchtigen. Dadurch wird also das Verhältnis von Steifigkeit zu Massenträgheit optimiert. Alternativ kann die Oberfläche auch rillenförmig quer zur oder in Richtung der Längsachse ausgebildet sein, mit den ähnlichen Vorteilen der Steifigkeits- und Gewichtsoptimierung. Andere Muster alternativ zu der rillen- oder Golfballförmigen Oberfläche sind ebenso vorstellbar.

Bevorzugt ist die nach außen gewölbte Form des zweiten Abschnitts 2 mit einer Oberfläche ausgebildet, die größer ist, als wenn die nach außen gewölbte Form eine glatte Oberfläche hätte. Dabei ist die Oberfläche bevorzugt um 20% - 50% größer als wenn die nach außen gewölbte Form eine glatte Oberfläche hätte.

Bevorzugt weisen die Längen des ersten 1, des zweiten 2 und des dritten Abschnitts 3 jeweils eine Länge von 20-60% der Gesamtlänge des Werkzeugschafts auf, wobei bevorzugt die Länge des ersten und des zweiten Abschnitts zusammengenommen weniger als 50% der Gesamtlänge des Werkzeugschafts beträgt.

Als Gesamtlänge des Hochgeschwindigkeitswerkzeughalters sind durch die erfindungsgemäße Geometrie und Art und durch die günstig hoch gedämpften Schwingungseigenschaften nun auch weitaus längere Gesamtlängen als bei herkömmlichen Hochgeschwindigkeitswerkzeughaltern möglich. Dadurch wird eine Bearbeitung von längeren Innenausfräsungen aus einem Werkstück ermöglicht.

Bevorzugt ist der zweite Abschnitt 2 vollständig in der Hälfte des Hochgeschwindigkeitswerkzeughalters angeordnet, die das erste Ende enthält. Alternativ bevorzugt ist der zweite Abschnitt 2 vollständig in dem Drittel des Hochgeschwindigkeitswerkzeughalters angeordnet, das das erste Ende enthält.

Bevorzugt weist der zweite Abschnitt 2 im Innern zentrisch entlang der Längsachse die zweite Bohrung 2e oder einen Hohlraum auf, der mit einem Füllstoff gefüllt ist. Dabei ist der Füllstoff so ausgewählt, um eine möglichst gute zusätzliche Schwingungsdämpfung zu erzeugen. Bevorzugt ist das spezifische Gewicht des Füllstoffs geringer als 50% des spezifischen Gewichts des Materials des Hochgeschwindigkeitswerkzeughalters.

Bevorzugt weist der dritte Abschnitt 3 im Innern zentrisch entlang der Längsachse die dritte Bohrung 3e oder einen Hohlraum auf, der mit einem weiteren Füllstoff gefüllt ist. Dabei ist der weitere Füllstoff bevorzugt derjenige, mit dem auch die zweite Bohrung 2e aufgefüllt ist, oder es ist ein anderer Füllstoff.

Bevorzugt sind der zweite 2e und/oder der dritte Hohlraum 3e oder die jeweilige entsprechende Bohrung 2e, 3e mit mindestens einem der folgenden korpuskulären Füllstoffe, oder aus einer Kombination daraus aufgefüllt: Stahlkugeln, Chromstahlkugeln, Kunststoffkugeln, Keramikkugeln, Quarzsand, Quarz, Sand, Aluminiumkugeln oder andere korpuskuläre Bestandteile. Bevorzugt ist auch die Anordnung von korpuskulären Füllstoffen in Kugellagern ohne Käfig.

Bevorzugt umfasst der Füllstoff der zweiten 2e und/oder dritten Bohrung 3e zusätzlich zu den korpuskulären Füllstoffen eine viskose Flüssigkeit oder Schaum, die/der so vorbestimmt ist, dass dadurch eine besonders gute Schwingungsdämpfung des Hochgeschwindigkeitswerkzeughalters erzeugt wird.

Bevorzugt ist der Hochgeschwindigkeitswerkzeughalter als Schrumpffutter ausgebildet. Alternativ ist der Hochgeschwindigkeitswerkzeughalter als Schraubverbinder oder Hybriddruckverbinder mit Spannhülse mit den oben genannten Merkmalen ausgebildet, wobei ein Teil des Werkzeugschafts von innen schraubenförmig eingedreht oder der Werkzeugschaft der Länge nach zu einem überwiegenden Ausmaß geschlitzt ist, um dadurch eine Spannhülse zur Klemmung des Werkzeugs zu bilden.

Bevorzugt besteht der Hochgeschwindigkeitswerkzeughalter aus einem der folgenden Materialien: Metall wie Stahl und insbesondere dämpfender Stahl, Kunststoff, einem Verbundwerkstoff wie einem Glasfaserverbundwerkstoff.

Bevorzugt ist auch eine Belüftungsbohrung im ersten Abschnitt 1 eingebracht, die den Hohlraum der ersten Bohrung 1 e mit der Umgebung verbindet.

Bevorzugt ist die Außenseite des Hochgeschwindigkeitswerkzeughalters gegen Umwelteinflüsse beschichtet.

Bevorzugt ist die Maschine, mit der der Hochgeschwindigkeitswerkzeughalter verbunden wird, eine Dreh-, Fräs- oder eine Bohrmaschine. Schwingungen des Hochgeschwindigkeitswerkzeughalters insbesondere auch bei hohen Umdrehungszahlen zerstören leicht und schnell das Werkzeug, so dass sowohl die Maschine als auch der Hochgeschwindigkeitswerkzeughalter und die Verbindung dazwischen besonders schwingungsarm ausgebildet werden müssen. Schwingungen würden das Werkzeug an den Schneidekanten schnell zerstören. Dazu ist der Hochgeschwindigkeitswerkzeughalter bevorzugt hochgradig zentrisch zur Längsachse ausgewuchtet ausgebildet. Die Schwingungskräfte, die durch das Werkzeug, wie beispielsweise einem Fräser mit zwei Schneidekanten, quer zur Längsachse auf den Hochgeschwindigkeitswerkzeughalter erzeugt und eingeleitet werden, dürfen möglichst keine oder nur so gering wie mögliche Schwingungen erzeugen. Dazu ist der Hochgeschwindigkeitswerkzeughalter ausgebildet, diese möglichst gut zu absorbieren oder zu dämpfen. Durch die nach außen gewölbten Form im zweiten Abschnitt 2 des Hochgeschwindigkeitswerkzeughalters kann die Steifigkeit erhöht und zugleich durch eine Aushöhlung oder durch den zweiten Hohlraum 2e eine Masse des Hochgeschwindigkeitswerkzeughalters reduziert werden.

Bevorzugt ist das Werkzeug dabei ein Fräser, ein Bohrer, ein Drehwerkzeug, ein Reibwerkzeug, welches unbeschichtet oder auch beschichtet sein kann.

Bevorzugt dient der Hochgeschwindigkeitswerkzeughalter zu einer spanenden Bearbeitung von Materialien, bevorzugt Dentalmaterialien, wie beispielsweise Legierungen, wie Kobalt-Chrom-Legierungen (beispielsweise Coron®),, Kunststoffen, Polyurethane, Aluminium, Glas, Guss, Feldspaltkeramiken, Titangrade 1-5 jeglicher Art, Hartmetalle, Blei, Zinn, Zink, Kupfer, Zirkonoxide, Aluminiumoxide, Borkarbide, Siliziumnitride, Siliziumcarbide, Edelstahl, Werkzeugstahl und Einsatzstahlsorten

Weitere mögliche Ausbildungsformen sind in den folgenden Ansprüchen beschrieben. Insbesondere können auch die verschiedenen Merkmale der oben beschriebenen Ausführungsformen miteinander kombiniert werden, soweit sie sich nicht technisch ausschließen.

Zur Klarheit sei angemerkt, dass im Rahmen dieser Beschreibung und der Ansprüche der "zweite Abschnitt 2" gleichbedeutend ist mit dem "Teilbereich des im Wesentlichen kreiskegelstumpfförmigen Werkzeugschafts zwischen der Werkzeugeinführungsöffnung und dem Maschinenspannteil mit einer nach außen gewölbten, bevorzugt kugelförmigen Form" oder kurz mit dem "Teilbereich mit der nach außen gewölbten Form". Der erste Abschnitt 1 ist dabei gleichbedeutend mit einem weiteren Teilbereich des Werkzeugschafts, der das äußere Ende des Werkzeugschafts an der Werkzeugeinführungsöffnung 5 bildet und der mit dem Teilbereich mit der nach außen gewölbten Form integral verbunden ist. Der dritte Abschnitt 3 ist gleichbedeutend mit einem abermals weiteren Teilbereich des Werkzeugschafts, der sich integral an den Teilbereich mit der nach außen gewölbten Form anschließt und der auf der anderen Seite mit dem Maschinenspannteil verbunden ist.

Die In den Ansprüchen genannten Bezugszeichen dienen der besseren Verständlichkeit, beschränken aber die Ansprüche nicht auf die in den Figuren dargestellten Formen.

### Bezugszeichenliste

- 1: erster Abschnitt des Werkzeugschafts
- 1a: weitere Verdickung
- 1b: erster Konus
- 1c: zweiter Konus
- 1d: erster Konuswinkel des ersten Konus zur Mittelachse
- 1e: erste Bohrung (des zweiten Teils des Werkzeugschafts)
- 2: zweiter Abschnitt des Werkzeugschafts
- 2e: zweite Bohrung
- 3: dritter Abschnitt des Werkzeugschafts
- 3a: Konuswinkel
- 3b: Kerbe
- 3e: dritte Bohrung
- 4: Maschinenspannteil
- 4a: Spannkonus
- 4b: Spannzylinder
- 4c: Nute
- 5: Werkzeugeinführungsöffnung
- 6a: erstes Trennelement
- 6b: zweites Trennelement
- 6c: drittes Trennelement
- D1-D7: erster - siebter Durchmesser

## Patentansprüche

1. Hochgeschwindigkeitswerkzeughalter zur Aufnahme eines Werkzeugs an seinem ersten Ende und zum Einspannen in eine Maschine an seinem zweiten Ende, wobei die Enden an den entgegengesetzten Seiten der Längsachse des Hochgeschwindigkeitswerkzeughalters angeordnet sind, wobei der Hochgeschwindigkeitswerkzeughalter folgendes umfasst:
a) einen Werkzeugschaft, der entlang der Längsachse zentrisch ausgebildet ist und das erste Ende des Hochgeschwindigkeitswerkzeughalters bestimmt, wobei am ersten Ende eine Werkzeugeinführungsöffnung (5) mit einer ersten Bohrung (1 e) zur Aufnahme des Werkzeugs ausgebildet ist, und
b) ein ebenfalls entlang der Längsachse zentrisch ausgebildetes Maschinenspannteil (4), das mit dem Werkzeugschaft an einem dem ersten Ende gegenüberliegenden Ende integral verbunden ist und eine Schnittstelle zum Einspannen in die Maschine darstellt, **dadurch gekennzeichnet, dass**
c) der Werkzeugschaft im Wesentlichen kreiskegelstumpfförmig ausgebildet ist, wobei ein erster Durchmesser (D1) am ersten Ende mit der Werkzeugeinführungsöffnung kleiner ist als ein fünfter Durchmesser (D5) am zweiten Ende am Maschinenspannteil und
d) ein Teilbereich des im Wesentlichen kreiskegelstumpfförmigen Werkzeugschafts zwischen Werkzeugeinführungsöffnung und Maschinenspannteil eine nach außen gewölbte, bevorzugt kugelförmige, Form aufweist.

2. Hochgeschwindigkeitswerkzeughalter gemäß Anspruch 1, wobei der Werkzeugschaft entlang der Längsachse in einen ersten (1), zweiten (2) und dritten Abschnitt (3) untergliedert ist, die der Reihe nach integral ineinander übergehen, wobei
- der erste Abschnitt (1) am ersten Ende mit der Werkzeugeinführungsöffnung (5) angeordnet ist und in Richtung zum zweiten Abschnitt (2) vom ersten Durchmesser (D1) zu einem zweiten Durchmesser (D2) im Wesentlichen kreiskegelstumpfförmig zunehmend ausgebildet ist;
- der zweite Abschnitt (2), der dem Teilbereich mit der nach außen gewölbten Form entspricht, an einer Stelle, die dem ersten Abschnitt (1) angrenzt, den zweiten Durchmesser (D2) hat und an einer Stelle, die dem dritten Abschnitt (3) angrenzt, einen vierten Durchmesser (D4) hat, der größer als oder gleich wie der zweite Durchmesser (D2) ist, wobei der zweite Abschnitt (2) über dessen Länge die in Bezug auf die Längsachse nach außen gewölbte und bevorzugt kugelige Form hat; und
- der dritte Abschnitt (3), an einer Stelle, die dem zweiten Abschnitt (2) angrenzt, den vierten Durchmesser (D4) hat und weiter bis zum fünften Durchmesser (D5) konisch zunimmt.

3. Hochgeschwindigkeitswerkzeughalter gemäß Anspruch 1 oder 2, wobei die nach außen gewölbte Form des Teilbereichs mit der nach außen gewölbten Form kugelförmig oder oval ausgebildet ist, wobei ein zusätzliches Materialvolumen zwischen dem kreiskegelstumpfförmigen Werkzeugschaft und der nach außen gewölbten Form erzeugt wird.

4. Hochgeschwindigkeitswerkzeughalter gemäß einem oder mehreren der vorstehenden Ansprüche, wobei die nach außen gewölbte Form eine Oberfläche mit einer Vielzahl von Mulden aufweist, die ähnlich der Oberfläche eines Golfballs, oder rillenförmig quer zur Längsachse oder rillenförmig in Richtung der Längsachse ausgebildet sind.

5. Hochgeschwindigkeitswerkzeughalter gemäß einem oder mehreren der vorstehenden Ansprüche, wobei die nach außen gewölbte Form des zweiten Abschnitts (2) mit einer Oberfläche ausgebildet ist, die zumindest 30% größer ist, als wenn die nach außen gewölbte Form eine glatte Oberfläche hätte.

6. Hochgeschwindigkeitswerkzeughalter gemäß einem oder mehreren der vorstehenden Ansprüche 2-5, wobei die Längen des ersten (1), des zweiten (2) und des dritten Abschnitts (3) jeweils eine Länge von 20-60% der Gesamtlänge des Werkzeugschafts aufweisen; und/oder
wobei eine Länge des ersten und des zweiten Abschnitts zusammengenommen kleiner als 50% der Gesamtlänge des Werkzeugschafts beträgt; und/oder
wobei der zweite Abschnitt (2) vollständig in der Hälfte des Hochgeschwindigkeitswerkzeughalters angeordnet ist, die das erste Ende enthält; oder
wobei der zweite Abschnitt (2) vollständig in dem Drittel des Hochgeschwindigkeitswerkzeughalters angeordnet ist, das das erste Ende enthält.

7. Hochgeschwindigkeitswerkzeughalter gemäß einem oder mehreren der vorstehenden Ansprüche, wobei der Teilbereich mit der nach außen gewölbten Form im Innern zentrisch entlang der Längsachse eine zweite Bohrung (2e) oder einen Hohlraum aufweist, der mit einem Füllstoff gefüllt ist.

8. Hochgeschwindigkeitswerkzeughalter gemäß einem oder mehreren der vorstehenden Ansprüche 2-7, wobei der dritte Abschnitt (3) im Innern zentrisch entlang der Längsachse eine dritte Bohrung (3e) oder einen Hohlraum aufweist, der mit einem weiteren Füllstoff gefüllt ist.

9. Hochgeschwindigkeitswerkzeughalter gemäß Anspruch 7 oder 8, wobei der Füllstoff der zweiten und/oder dritten Bohrung (2e, 3e) einen der folgenden korpuskulären Füllstoffe oder eine Kombination daraus umfasst, wie Stahlkugeln, Chromstahlkugeln, Kunststoffkugeln, Keramikkugeln, Quarzsand, Quarz, Sand, Aluminiumkugeln oder andere korpuskuläre Bestandteile.

10. Hochgeschwindigkeitswerkzeughalter gemäß Anspruch 9, wobei der Füllstoff der zweiten und/oder dritten Bohrung (2e, 3e) zusätzlich zu dem mindestens einen korpuskulären Füllstoff eine viskose Flüssigkeit oder Schaum umfasst, die/der so vorbestimmt ist, dass dadurch eine besonders gute Schwingungsdämpfung des Hochgeschwindigkeitswerkzeughalters erzeugt wird.

11. Hochgeschwindigkeitswerkzeughalter gemäß einem oder mehreren der vorstehenden Ansprüche, wobei der Hochgeschwindigkeitswerkzeughalter als Schrumpffutter ausgebildet ist, bei dem der Werkzeugschaft das durch eine thermische Ausdehnung und Schrumpfung das Werkzeug klemmend hält, oder der ausgebildet ist, durch einen Schraubverbinder und eine Spannhülse das Werkzeug klemmend zu halten.

12. Hochgeschwindigkeitswerkzeughalter gemäß einem oder mehreren der vorstehenden Ansprüche, wobei er aus einem der folgenden Materialien besteht, wie Metall, Kunststoff, einem Verbundwerkstoff, oder einem Glasfaserverbundwerkstoff.

13. Hochgeschwindigkeitswerkzeughalter gemäß einem oder mehreren der vorstehenden Ansprüche, wobei die Maschine eine Dreh-, Fräs- oder Bohrmaschine ist; und/oder
wobei das Werkzeug ein Fräser, ein Bohrer, ein Drehwerkzeug, oder ein Reibwerkzeug ist, und welches unbeschichtet, beschichtet oder antikorrosiv beschichtet ist.

14. Hochgeschwindigkeitshalter gemäß einem oder mehreren der vorstehenden Ansprüche, wobei die benannten Werkzeughalterversionen in allen gängigen Werkzeughalteformen und ,-Kegelgrößen erstellt und zum Einsatz gebracht werden können.

15. Hochgeschwindigkeitswerkzeughalter gemäß einem oder mehreren der vorstehenden Ansprüche 2-14, wobei der erste Abschnitt (1) am ersten Ende nach dem ersten Durchmesser (D1) entlang der Längsachse eine weitere Verdickung (1a) mit einem siebten Durchmesser (D7) aufweist, wobei die Verdickung (1a) vom ersten Durchmesser (D1) zunächst zunimmt, nach dem siebten Durchmesser (D7) dann wieder abnimmt und dann weiterlaufend bis zum zweiten Durchmesser (D2) am Übergang zum zweiten Abschnitt (2) konisch zunimmt, wobei die weitere Verdickung (1a) ausgebildet ist, lokal eine höhere Steifigkeit und dadurch ein genügend starkes Klemmen des Werkstücks zu erzeugen.
